# EUROPÄISCHE PATENTSCHRIFT

(11) **EP 3 128 244 B1**
(45) Veröffentlichungstag und Bekanntmachung des Hinweises auf die Patenterteilung: **18.11.2020**
(21) Anmeldenummer: 16179829.3
(22) Anmeldetag: 16.07.2016
(51) Int. Cl.: F24F 5/00

(54) **AKTIVIERBARES BETON-VERBUNDELEMENT**
ACTIVATABLE CONCRETE-CONTAINING COMPOSITE ELEMENT
ELÉMENT COMPOSITE ACTIVABLE CONTENANT DU BÉTON

(30) Priorität: 03.08.2015 CH 11252015
(43) Veröffentlichungstag der Anmeldung: 08.02.2017
(73) Patentinhaber: ERNE AG Holzbau, 5080 Laufenburg (CH)
(72) Erfinder: Suter, Patrick, 5062 Oberhof (CH)
(74) Vertreter: Herrmann, Johanna

(56) Entgegenhaltungen:
- DE-A1- 10 043 968
- DE-A1-102011 084 423
- DE-U1-202008 007 139
- DE-U1-202012 006 727

## Beschreibung

Die vorliegende Anmeldung bezieht sich auf ein aktivierbares Beton-Verbundelement für ein Raumsystem, welches mit einer Vorrichtung zur Temperierung der im Raum befindlichen Luft ausgestattet ist. Insbesondere weist das Raumsystem ein Deckenelement, beispielsweise für eine Gebäudedecke auf, die als aktivierbares Betonplattenelement ausgebildet ist.

Aus der CH690457 ist ein Verfahren zur Kühlung eines Raumes durch Kühlung von Raumluft im Deckenbereich bekannt, welches durch erzwungene Konvektion an Kühlelementen in einem im Deckenbereich liegenden Kühlbereich erfolgt und der Luftaustausch zwischen dem Kühlbereich und einem unterhalb desselben liegenden Aufenthaltsbereichs durch freie Konvektion bewirkt wird. Der Kühlbereich ist vom Aufenthaltsbereich durch ein luftdurchlässiges Trennelement getrennt und bildet eine Luftkühldecke aus. Im Kühlbereich wird mittels Ventilatoren eine horizontal ausgerichtete Luftströmung erzeugt. Im Kühlbereich ist zusätzlich ein von einem Wärmeträgermedium durchströmtes Rohr angeordnet, um die vom Aufenthaltsbereich durch das luftdurchlässige Trennelement strömende Luft zusätzlich zu kühlen. Als nachteilig an dieser Lösung aus dem Stand der Technik hat sich der zusätzliche Energiebedarf erwiesen, der durch den Betrieb der Ventilatoren erforderlich ist.

Die Verwendung von Kühldecken hat grundsätzlich den Vorteil, dass Zugluft vermindert werden kann, insbesondere wenn in den Raum von der Kühldecke herkommende einströmende Luft durch die Luftkühlelemente vorgewärmt werden kann, sodass kompakte Kaltluftströmungen vermieden werden können. Durch eine warme Luftströmung, die der Kaltluftströmung entgegengesetzt gerichtet ist, kann gemäss EP 2746684 A1 eine Zugluftwalze verhindert werden. Eine Lösung zur Vermeidung von Zugluft wird auch in der EP 0298 996 B1 offenbart, in welchem auf Ventilatoren im Raum gänzlich verzichtet werden kann. Dieses Dokument zeigt ein als Wärmetauscher ausgebildetes Deckenelement, mittels welchem aufsteigende erwärmte Raumluft gekühlt werden kann. Dieser Wärmetauscher ist als ein Luft-Luft Wärmetauscher ausgebildet, durch welchen Frischluft strömt, die von einer ausserhalb des Raums befindlichen Frischluftquelle stammt. Der Wärmeübergang an die Raumluft kann durch Wärmeleitung über die Kanalwände erfolgen, es kann dem aber auch Frischluft über Öffnungen in den Kanalwänden zugeführt werden. Die Frischluft verbleibt in der unmittelbaren Umgebung der Öffnungen als Mikroströmung, sie dient also nur dem Wärmetausch, nicht aber der Frischluftversorgung des Raums. Vielmehr wird die durch die Kanäle des Wärmetauschers strömende Frischluft in einen Diffusor geleitet. Die Frischluft tritt aus dem Diffusor aus und strömt nach unten mit einer Strömungsgeschwindigkeit von 0.15 m/s in den Raum. Durch den Diffusor wird zwar die Strömungsgeschwindigkeit der austretenden Frischluft erniedrigt, allerdings tritt die Frischluft bedingt durch die Anordnung des Diffusors in einem Raumende lokal von diesem Raumende in den Raum ein, sodass eine im Wesentlichen ringförmige Strömung entsteht. Wenn hingegen die Raumluft aufgeheizt oder abgekühlt werden muss, muss dem Diffusor ein separater Kaltluftstrom oder Warmluftstrom zugeführt werden. Durch den Wärmetauscher soll ein andauernder Temperaturausgleich erfolgen, was bei geringen Temperaturdifferenzen zwischen der aus dem Diffusor ausströmenden Kaltluft oder Warmluft einerseits und der Raumluft andererseits durch geringe Frischluftströmungsgeschwindigkeiten gewährleistet werden kann. Bei grösseren Temperaturdifferenzen oder erhöhter Heiz- oder Kühlgeschwindigkeit ist ein erhöhter Luftdurchsatz durch den Wärmetauscher erforderlich, der wiederum nur mit Gebläsen erzielbar ist, was in der CH690457 oder auch der DE 20 2012 006 727 U1 gezeigt ist. Diesen Lösungen ist gemeinsam, dass der Wärmeaustausch über einen Luftstrom erfolgt, der von einem Aussenbereich in den Raum geleitet wird und den Raum wieder in den Aussenbereich verlassen muss. Wenn dieser Luftstrom aufgeheizt oder abgekühlt muss, ist hierzu ein hoher Energiebedarf erforderlich. Daher wurde im Stand der Technik nach Möglichkeiten gesucht, den Energiebedarf zu verringern, beispielsweise ist aus der EP 1 022 518 A1 bekannt, die thermische Trägheit einer Betondecke als Wärmespeicher zu nutzen. Die Betondecke wird mittels innerhalb der Betondecke verlaufenden Rohren gekühlt oder beheizt. In den Rohren fliesst ein Wärmeübertragungsmedium, beispielsweise Wasser oder eine Sole. Auf der Oberseite der Betondecke befindet sich ein Bodenbelag aus einem Material mit geringer Wärmeleitfähigkeit, welcher eine Isolationsschicht ausbildet. Unterhalb der Betondecke ist eine Zwischendecke angeordnet, welche eine Abschirmungsvorrichtung enthält, die eine Durchlässigkeit für Luft aufweist. Die Abschirmungsvorrichtung umfasst eine Anordnung von verstellbaren Platten, mit denen die in den Raum strömende Luftmenge verändert werden kann. Allerdings ist es selbst mit dem in der Betondecke angebrachten Rohrwärmetauscher nur möglich, etwa 10 bis 15 cm Tiefe der Betondecke für den Wärmeaustausch zu nutzen. Mit anderen Worten stehen bis zu 2/3 der Betondecke für den Wärmeaustausch nicht zur Verfügung.

Um den Wärmeaustausch zu verbessern, sollte daher ein möglichst grosser Anteil der Betondecke direkt mit der Raumluft in Kontakt gebracht werden können. Einerseits könnte hierzu die Oberfläche der Betondecke vergrössert werden, was aber zu einem erhöhten Eigengewicht der Decke führen kann, wenn beispielsweise eine berippte Oberfläche vorgesehen wird, wie sie beispielsweise in der EP0568441 A1 gezeigt ist. Andererseits könnten weitere Kühl- oder Heizrohre in der Betondecke vorgesehen sein, was beispielsweise in der CH225745 A gezeigt ist. Allerdings dürfen die Kühl- oder Heizrohre nicht in den Beton eingelassen werden, sondern müssen aus Gründen der Wärmedehnung in Hohlkörper eingebettet werden, sodass eine ungehinderte Wärmedehnung der Kühl- oder Heizrohre ermöglicht ist. Hierdurch wird aber Anteil des Wärmeübergangs der durch Wärmeleitung erfolgt, verringert, sodass der energetische Wirkungsgrad verschlechtert wird.

Zur Verringerung von Zugbelastungen auf eine Betondecke, die Durchbiegungen ausgesetzt ist, wird in der CH225745 A auch vorgeschlagen, die Betondecke in Verbundbauweise auszuführen. Diese Verbundbauweise kann die Verwendung von Betonträgern oder Stahlträgern umfassen, die in die Betondeckenmasse eingegossen werden. Diese Beton- oder Stahlträger dienen als tragende Strukturen, welche Zugbelastungen aufnehmen können. Wenn Kühl- oder Heizrohre zusätzlich vorgesehen werden müssen, müssen diese in die zwischen diesen tragenden Strukturen angeordnet werden, was zusätzlichen konstruktiven Aufwand zur Folge hat. Insbesondere werden die Kühl- oder Heizrohre durch einen Verputz abgedeckt, was wiederum einen schlechteren Wirkungsgrad zur Folge hat, da von den Kühl- oder Heizrohren zuerst die sie umgebende Luft im Hohlraum abgekühlt oder erwärmt werden muss und diese Luft im Anschluss den Verputz abkühlt oder erwärmt. Erst über den Verputz wird die Luft in unmittelbarer Nähe des Verputzes erwärmt oder abgekühlt. Wenn kein Luftaustausch erfolgen kann, wird die Luft im Raum je nach deren Höhe eine unterschiedliche Temperatur aufweisen.
Nach einer Variante können auch Holzträger als tragende Elemente für eine Holzdecke vorgesehen werden, wobei allerdings die Holzdecke eine Wärmeisolationsschicht enthält, sodass sie im Gegensatz zur Betondecke für einen Wärmeaustausch nicht verwendbar ist. Daher werden gemäss dieses Ausführungsbeispiels die Heiz- oder Kühlrohre auf einer Zwischendecke angeordnet, die auf den Holzbalken befestigt wird. Zwischen der Zwischendecke und der Holzdecke verbleibt somit zwischen den Tragbalken ein Hohlraum, der nicht zugänglich ist, nachdem die Kühlrohre auf der zugehörigen Kühlplatte montiert worden sind. Die Kühlplatte wird zusätzlich vom Verputz verdeckt, der unterhalb der Kühlplatte angeordnet ist. Neben dem hohen Montageaufwand ist auch der Wartungsaufwand hoch, weil die Kühlrohre erst wieder zugänglich sind, nachdem Verputz und Kühlplatte entfernt worden sind.

Um die Wärmeübertragung sowie auch die Isolationswirkung zu verbessern, wurde für eine Bodenheizung in der EP 2128353 A1 ein Beton-Holzverbundfertigteil vorgeschlagen. Durch die Verwendung eines Beton-Holzverbundbauteils können einerseits die Zugbelastungen, die auf das Deckenelement oder Bodenelement wirken, von den Holzträgern aufgenommen werden, sodass die Betonplatte im Wesentlichen nur Druckkräfte aufnehmen muss.

Andererseits kann die Dämmwirkung optimiert werden. Die Betonplatte liegt auf einer Platte auf, die von den Holzträgern gestützt ist. Die Holzträger liegen wiederum auf einer Lattung auf, die von einer Beplankung verdeckt ist. Zwischen benachbarten Holzträgern verbleibt ein Hohlraum, der ebenfalls mit Dämmmaterial befüllt werden kann. Dieses Beton-Holzverbundfertigteil weist also nach unten gute Isolationseigenschaften auf und nach oben einen guten Wärmeübergang, weil sämtliche Wärme auf die Oberseite des Beton-Holzverbundfertigteils geleitet werden kann, womit eine optimierte Fussbodenheizung erhalten wird.

Aufgabe der Erfindung ist es daher, ein aktivierbares Beton-Verbundelement zu schaffen, welches eine Temperierung der Raumluft ermöglicht.

Diese Aufgabe wird mittels eines aktivierbaren Beton-Verbundelements nach Anspruch 1 gelöst. Die Unteransprüche 2 bis 15 betreffen vorteilhafte Ausgestaltungen des Raumsystems.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Raumsystem. Das Raumsystem kann mittels unterschiedlich gestalteter oder angeordneter Komponenten erhalten werden, sodass die Beschreibung eines bestimmten Raumsystems nur als beispielhaft anzusehen ist. In der Beschreibung und den Ansprüchen werden die Begriffe "enthalten", "umfassen", "aufweisen" als "enthalten, aber nicht beschränkt auf..." interpretiert.

Die Lösung der Aufgabe erfolgt durch ein Beton-Verbundelement für eine Gebäudedecke, welches ein Betonplattenelement, ein erstes Balkenelement und ein zweites Balkenelement umfasst. Das Betonplattenelement liegt auf dem ersten Balkenelement und dem zweiten Balkenelement auf. Das Betonplattenelement, das erste Balkenelement und das zweite Balkenelement begrenzen einen Zwischenraum. Der Zwischenraum enthält ein Luftumwälzelement, mittels welchem das Betonplattenelement angeblasen werden kann. Das heisst, dass durch das Luftumwälzelement ein Luftstrom erzeugbar ist, welcher auf die dem Zwischenraum zugewendete Oberfläche des Betonplattenelements gerichtet ist. Der Luftstrom kann Wärme vom Betonplattenelement aufnehmen oder Wärme an das Betonplattenelement abgeben. Im ersten Fall wird der Luftstrom aufgewärmt, weil eine Wärmeabgabe des Betonplattenelements an den Luftstrom erfolgt. Die Temperatur des Betonplattenelements sinkt. Im zweiten Fall wird der Luftstrom abgekühlt, weil vom Luftstrom ein Wärmeübergang an das Betonplattenelementerfolgt. Das heisst, es erfolgt in diesem Fall eine Wärmeaufnahme des Betonplattenelements, sodass die Temperatur des Betonplattenelements ansteigt. Das Betonplattenelement kann somit als ein Wärmespeicher oder ein Kältespeicher ausgebildet sein. Je nach Jahreszeit kann die Betriebsart auch zwischen Wärmespeicher und Kältespeicher wechseln.

Jedes der Balkenelemente kann eine Oberseite und eine Unterseite aufweisen, wobei die Oberseite des Balkenelements das Betonplattenelement trägt. Allfällige Zugspannungen, welche durch eine Durchbiegung des Beton-Verbundelements entstehen können, werden somit vom Balkenelement aufgenommen, sodass auf das Betonplattenelement keine Zugspannungen wirken. Das Betonplattenelement wird somit auf Druck belastet. Durch diese Massnahme kann das Betonplattenelement dünnwandig ausgeführt werden, da die tragende Funktion von den Balkenelementen übernommen wird. Insbesondere kann das Betonplattenelement eine Höhe von maximal 15 cm aufweisen. Daher kann das gesamte Betonplattenelement als Wärme- oder Kältespeicher genutzt werden. Somit kann überraschenderweise nicht nur eine Gewichtsreduktion durch die Verwendung eines Betonplattenelements wesentlich geringerer Dicke erzielt werden, sondern auch das gesamte Betonplattenelement als Wärme- oder Kältespeicher genutzt werden.

Zusätzlich können im Betonplattenelement noch Kanäle vorgesehen sein, durch welche ein Heizmedium oder ein Kühlmedium in Kontakt mit dem Bodenplattenelement kommen kann. Somit kann bei Bedarf noch mehr Wärme zugeführt oder abgeführt werden.

Das Beton-Verbundelement kann Bestandteil eines Raumsystems sein, welches ein Deckenelement umfasst, welches das Beton-Verbundelement enthält. Das Raumsystem enthält zumindest ein erstes Wandelement und ein zweites Wandelement. Das Raumsystem enthält ein Bodenelement, welches insbesondere gleich wie das Deckenelement ausgebildet sein kann. Das heisst, auf dem Beton-Verbundelement kann ein Bodenbelag angebracht sein, sodass das Deckenelement ein Bodenelement für ein weiteres, darüber liegendes Stockwerk eines Gebäudes ausbilden kann. Das Raumsystem kann auch ein drittes und/oder viertes Wandelement aufweisen. Jedes der Wandelemente kann Fenster oder Türen enthalten. Das erste Balkenelement weist ein erstes Balkenende und ein zweites Balkenende auf. Das zweite Balkenelement weist ein erstes Balkenende und ein zweites Balkenende auf. Das erste Balkenende des ersten und zweiten Balkenelements liegt auf dem ersten Wandelement auf und das zweite Balkenende des ersten und zweiten Balkenelements liegt auf dem zweiten Wandelement auf. Jedes der Balkenelemente weist eine Oberseite und eine Unterseite auf, wobei nach einem Ausführungsbeispiel die Oberseite das Betonplattenelement trägt. Das Balkenelement kann als Holzbalken ausgebildet sein oder einen Holzbalken enthalten. Das Balkenelement kann auch als ein Stahlträger ausgebildet sein. Des Weiteren kann das Balkenelement als ein Verbundbauteil ausgebildet sein, welches zumindest eines der Materialien Holz oder einen eisenhaltigen Baustoff enthält. Insbesondere kann das Balkenelement auch als ein mit Holz oder einem eisenhaltigen Baustoff verstärktes Betonelement ausgebildet sein.

Insbesondere können das Betonplattenelement, das erste Wandelement, das zweite Wandelement, das erste Balkenelement und das zweite Balkenelement den Zwischenraum begrenzen. Der Zwischenraum ist daher nach unten offen, sodass durch das Luftumwälzelement ein Luftaustausch zwischen dem Zwischenraum und dem sich darunter erstreckenden Aufenthaltsraum stattfinden kann.

Der Zwischenraum enthält das Luftumwälzelement. Nach einem Ausführungsbeispiel kann das Luftumwälzelement einen Strömungskanal enthalten, sodass der Luftstrom vom Luftumwälzelement in den Aufenthaltsraum leitbar ist. Mittels des Luftumwälzelements kann ein Luftzug vom Aufenthaltsraum in Richtung des Betonplattenelements geleitet werden. Das Luftumwälzelement kann als ein Gebläse ausgebildet sein oder ein Rohrsystem umfassen, das mit einer Druckluftquelle oder Vakuumquelle verbunden ist, sodass durch ein Druckgefälle ein Luftstrom erzeugbar ist.

Nach einem Ausführungsbeispiel kann das Luftumwälzelement einen Strömungskanal enthalten, dessen Querschnitt sich in Strömungsrichtung kontinuierlich verengt und anschliessend kontinuierlich erweitert. Insbesondere ist das Luftumwälzelement als ein Venturielement ausgebildet. Das Venturielement kann insbesondere als ein Venturirohrelement ausgebildet sein. Das Luftumwälzelement weist insbesondere ein Eintrittsende und ein Austrittsende auf.

Nach einem Ausführungsbeispiel enthält das Luftumwälzelement zumindest einen Strömungsquerschnitt aus der Gruppe der rechteckigen, ringförmigen, kreisförmigen oder vieleckigen Strömungsquerschnitte. Die Strömungsquerschnitte können unterschiedliche Grösse aufweisen und in dem Zwischenraum können Luftumwälzelemente unterschiedlicher Querschnittsform miteinander kombiniert werden. Im Zwischenraum kann daher eine Mehrzahl von Luftumwälzelementen angeordnet sein. Zumindest ein Teil der Luftumwälzelemente kann einen Strömungsquerschnitt aufweisen, der kleiner ist als der Strömungsquerschnitt eines anderen Teils der Luftumwälzelemente. Somit können je nach Lage des Zwischenraums im Aufenthaltsraum unterschiedliche Kühleffekte oder Heizeffekte erzeugt werden.
Insbesondere kann das Luftumwälzelement derart im Zwischenraum angeordnet sein, dass eine Luftströmung vom Raum in Richtung des Betonplattenelements leitbar ist. Der Strömungskanal des Luftumwälzelements kann insbesondere vertikal angeordnet sein. Insbesondere kann das Betonplattenelement von der Luftströmung beheizbar oder kühlbar sein, sodass das Betonplattenelement als ein Wärmespeicher oder ein Kältespeicher ausgebildet ist.

Insbesondere weist das Balkenelement eine Oberseite und eine Unterseite auf, wobei die Oberseite das Betonplattenelement trägt. Nach einem Ausführungsbeispiel erstreckt sich von der Unterseite des Balkenelements zur Unterseite des zweiten Balkenelements ein Abdeckelement. Das Abdeckelement kann Öffnungen zum Durchtritt von Luft aufweisen. Insbesondere können zumindest ein Teil der Öffnungen einer Austrittsöffnung des Strömungskanals oder Austrittsöffnungen der Strömungskanäle entsprechen.

Nach einem Ausführungsbeispiel ist das Abdeckelement luftdurchlässig. Das Abdeckelement kann beispielsweise Schlitze enthalten, kann eine Gitterstruktur oder Siebstruktur aufweisen oder kann ein regelloses luftdurchlässiges Vlies enthalten.

Nach einem Ausführungsbeispiel kann das Luftumwälzelement mittels eines Halteelements an dem Balkenelement und/oder dem Betonplattenelement gehalten sein.

Nach einem Ausführungsbeispiel enthält das Deckenelement eine Mehrzahl von Balkenelementen. Im Zwischenraum können nach einem Ausführungsbeispiel ein Schalldämmelement und/oder ein Abscheideelement für Feuchtigkeit vorgesehen sein.

Nach einem Ausführungsbeispiel können eines oder mehrere Temperierelemente vorgesehen sein. Die Temperierelemente können zwischen dem Luftumwälzelement und einem der ersten oder zweiten Wandelemente angeordnet sein. Das oder die Temperierelemente können am Abdeckelement angebracht sein oder können auch im Betonplattenelement verlaufen oder an zumindest einer der Oberflächen des Betonplattenelements angebracht sein. Ein derartiges Temperierelement kann beispielsweise als geschlossener Kanal ausgebildet sein, insbesondere als Rohrelement.

Die Erfindung wird nachfolgend anhand von in den Zeichnungen dargelegten Ausführungsbeispielen näher erläutert. Diese zeigen:
- Fig. 1: eine Seitenansicht eines ersten Ausführungsbeispiels der Erfindung,
- Fig. 2: eine Draufsicht auf ein Beton-Verbundelement gemäss des ersten Ausführungsbeispiels,
- Fig. 3: eine Seitenansicht eines zweiten Ausführungsbeispiels der Erfindung,
- Fig. 4: eine Draufsicht auf ein Beton-Verbundelement gemäss des zweiten Ausführungsbeispiels

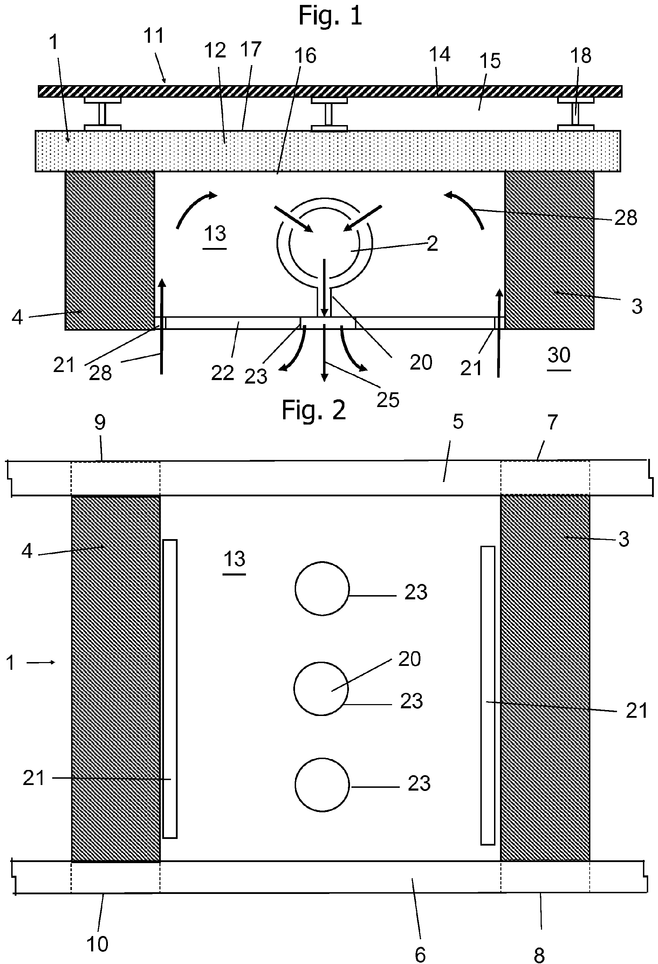

Fig. 1 zeigt ein erstes Ausführungsbeispiel der Erfindung. Ein Raumsystem umfasst ein Deckenelement 11, welches ein Beton-Verbundelement 1 enthält. Das Beton-Verbundelement 1 umfasst ein Betonplattenelement 12, ein erstes Balkenelement 3 und ein zweites Balkenelement 4. Das Betonplattenelement 12 liegt auf dem ersten Balkenelement 3 und dem zweiten Balkenelement 4 auf. Das Betonplattenelement weist eine erste Oberfläche 16 auf, die dem Zwischenraum 13 zugewendet ist. Das Betonplattenelement weist eine zweite Oberfläche 17 auf, die der ersten Oberfläche gegenüberliegt. Auf dem Betonplattenelement 12 kann ein Boden 14 verlegt sein, wobei zwischen dem Boden 14 und der Oberfläche 17 des Betonplattenelements ein Zwischenboden 15 vorgesehen werden kann. Der Boden 14 kann auf Stützträgern 17 auf der Oberfläche 17 gelagert sein. Der Zwischenboden 15 kann als ein Hohlraum ausgebildet sein. Der Hohlraum kann mit wärmedämmendem oder schallisolierendem Material gefüllt sein. Das Betonplattenelement 12, das erste Balkenelement 3 und das zweite Balkenelement 4 begrenzen einen Zwischenraum 13. Der Zwischenraum 13 enthält ein Luftumwälzelement 2. Das Luftumwälzelement 2 kann beispielsweise ein Gebläse umfassen oder ein Rohrsystem, welches mit Lufteintrittsöffnungen und Luftaustrittsöffnungen ausgestattet ist. Durch das Luftumwälzelement 2 kann ein Strömungskanal 20 gebildet werden, oder das Luftumwälzelement 2 kann einen Strömungskanal 20 enthalten, mittels welchem Luft vom Zwischenraum 13 in einen darunter liegenden Aufenthaltsraum 30 eingeleitet werden kann. Der Luftstrom ist schematisch durch Pfeile 25 versinnbildlicht. Vom Aufenthaltsraum 30 gelangt Luft durch die Schlitze 21 in den Zwischenraum 13. Der Luftstrom vom Aufenthaltsraum 30 ist dabei in Richtung der Oberfläche 16 des Betonplattenelementes 12 gerichtet. Der Luftstrom kann die Oberfläche 17 des Betonplattenelements 12 erwärmen oder abkühlen. Durch Wärmeleitung wird auch das zwischen der Oberfläche 16 und der Oberfläche 17 befindliche Volumen des Betonplattenelements 12 erwärmt oder abgekühlt. Dieser Effekt tritt insbesondere bis zu einem Abstand von 10 bis 15 cm, gemessen von der Oberfläche 16 in Richtung der Oberfläche 17 auf. Somit kann das Betonplattenelement bis zu einer Höhe von 10 -15 cm von der Oberfläche 16 Wärme aufnehmen oder Wärme abgeben, sowie eine Wärmespeicherfunktion ausüben. Ein derartiges Betonplattenelement wird auch als aktivierbares Betonplattenelement bezeichnet.

Der Zwischenraum 13 ist vom Aufenthaltsraum 30 durch ein Abdeckelement 22 getrennt. Das Abdeckelement 20 weist eine Öffnung 23 für den Strömungskanal 20 auf. Des Weiteren weist das Abdeckelement einen oder mehrere Schlitze 21 auf, durch welche Luft aus dem Aufenthaltsraum 30 in den Zwischenraum 13 eintreten kann.

In Fig. 2 ist ein erstes Wandelement 5 und ein zweites Wandelement 6 gezeigt. Das erste Balkenende 7 des ersten Balkenelements 3 sowie das erste Balkenende 9 des zweiten Balkenelements 4 liegen auf dem Wandelement 5 auf. Das zweite Balkenende 8 des ersten Balkenelements 3 sowie das zweite Balkenende 10 des zweiten Balkenelements 4 liegen auf dem Wandelement 6 auf.

Insbesondere kann das Luftumwälzelement derart im Zwischenraum angeordnet sein, dass ein Luftstrom 25 vom Zwischenraum 13 in den Aufenthaltsraum 30 leitbar ist. Insbesondere kann ein Luftzug 28 vom Aufenthaltsraum 30 in Richtung des Betonplattenelements 12 leitbar sein.

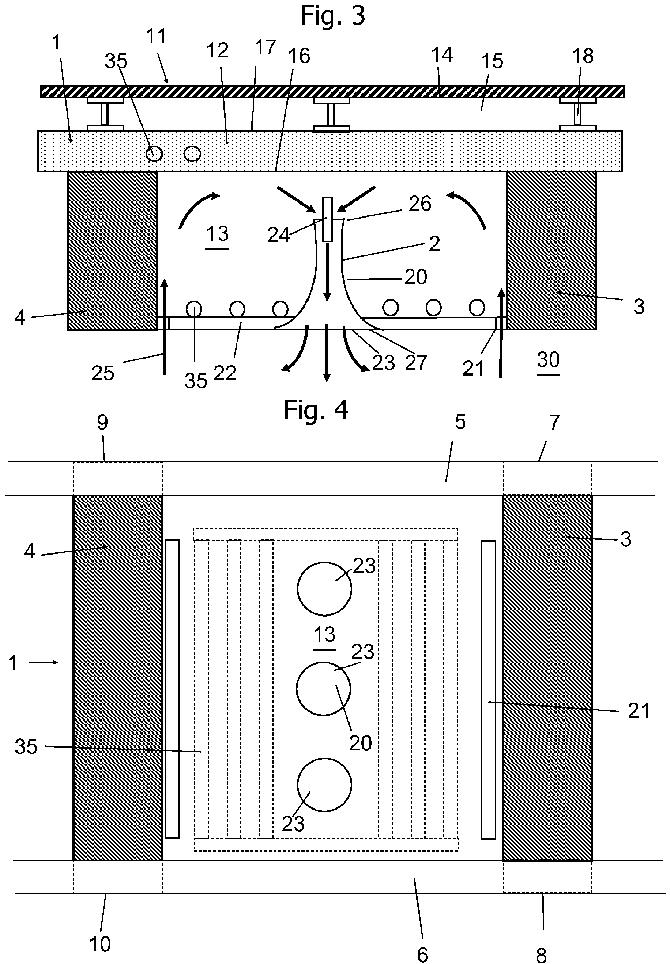

Fig. 3 zeigt eine Seitenansicht eines zweiten Ausführungsbeispiels der Erfindung, Fig. 4 eine Draufsicht auf ein Beton-Verbundelement gemäss des zweiten Ausführungsbeispiels. Das zweite Ausführungsbeispiel unterscheidet sich vom ersten Ausführungsbeispiel in der Ausgestaltung des Luftumwälzelements 2 sowie durch zusätzliche Temperierelemente 35. Die Temperierelemente 35 können am Abdeckelement 22 angebracht sein oder können auch im Betonplattenelement verlaufen oder an zumindest einer der Oberflächen 16, 17 des Betonplattenelements angebracht sein, was zeichnerisch nicht dargestellt ist.

Das Luftumwälzelement 2 gemäss Fig. 3 enthält einen Strömungskanal 20, dessen Querschnitt sich in Strömungsrichtung kontinuierlich verengt und anschliessend kontinuierlich erweitert. Der Strömungskanal 20 des Luftumwälzelements 2 weist insbesondere ein Eintrittsende 26 und ein Austrittsende 27 auf. Der Strömungskanal 20 erstreckt sich vom Eintrittsende 26 zum Austrittsende 27. Insbesondere kann der Strömungskanal des Luftumwälzelements einen Strömungsquerschnitt aus der Gruppe der rechteckigen, ringförmigen, kreisförmigen oder vieleckigen Strömungsquerschnitte aufweisen. Die Strömungsquerschnitte können unterschiedliche Grösse aufweisen und in dem Zwischenraum können Luftumwälzelemente 2 13 unterschiedlicher Querschnittsform miteinander kombiniert werden. Im Zwischenraum 13 kann daher eine Mehrzahl von Luftumwälzelementen angeordnet sein. Zumindest ein Teil der Luftumwälzelemente kann einen Strömungsquerschnitt aufweisen, der kleiner ist als der Strömungsquerschnitt eines anderen Teils der Luftumwälzelemente. Somit können je nach Lage des Zwischenraums im Aufenthaltsraum unterschiedliche Kühleffekte oder Heizeffekte erzeugt werden.

Der Strömungskanal 20 des Luftumwälzelements 2 kann nach jedem der Ausführungsbeispiele insbesondere vertikal angeordnet sein. Insbesondere kann das Betonplattenelement 12 vom Luftstrom 25 beheizbar oder kühlbar sein, sodass das Betonplattenelement als ein Wärmespeicher oder ein Kältespeicher ausgebildet ist. Durch den Luftstrom 25 wird eine Zirkulationsströmung erzeugt, die vom Zwischenraum 13 in den Aufenthaltsraum 30 eintritt und einen Luftzug 28 erzeugt, welcher in Richtung der Oberfläche 16 des Betonplattenelements 12 gerichtet ist.

Insbesondere weist das Balkenelement 3, 4 nach jedem der Ausführungsbeispiele eine Oberseite und eine Unterseite auf, wobei die Oberseite das Betonplattenelement 12 trägt. Nach jedem der Ausführungsbeispiele erstreckt sich von der Unterseite des Balkenelements zur Unterseite des zweiten Balkenelements ein Abdeckelement 22. Das Abdeckelement 22 kann Öffnungen 23 zum Durchtritt des Luftstroms 25 aufweisen. Insbesondere kann zumindest ein Teil der Öffnungen 23 einem Austrittsende, beispielsweise dem Austrittsende 27 eines Strömungskanals 20 entsprechen. Der Strömungskanal 20 kann seitliche Einlassöffnungen aufweisen, sodass ein Teilluftstrom vom Zwischenraum 13 in den Strömungskanal 20 angesaugt wird.
Nach einem Ausführungsbeispiel kann der Strömungskanal 20 ein Düsenelement 24 aufweisen, wobei Luft durch das Düsenelement strömt und ein Teilluftstrom durch die ringförmige Eintrittsöffnung 26 angesaugt wird. Das Düsenelement arbeitet somit nach dem Venturiprinzip. Die durch das Düsenelement strömende Luft kann unter höherem Druck stehen als die Luft im Zwischenraum 13. Die durch das Düsenelement strömende Luft kann beispielsweise Frischluft sein. Die durch das Düsenelement strömende Luft kann vorgewärmt oder vorgekühlt sein, je nachdem ob der Aufenthaltsraum beheizt oder gekühlt werden soll.

Nach einem Ausführungsbeispiel ist das Abdeckelement 22 luftdurchlässig. Das Abdeckelement 22 kann beispielsweise Schlitze 21 enthalten, kann eine Gitterstruktur oder Siebstruktur aufweisen oder kann ein regelloses luftdurchlässiges Vlies umfassen.
Nach einem Ausführungsbeispiel kann das Luftumwälzelement mittels einem Halteelement an dem Balkenelement 3, 4 und/oder dem Betonplattenelement gehalten sein. Das Halteelement ist in den Zeichnungen nicht dargestellt.

Nach einem Ausführungsbeispiel enthält das Deckenelement eine Mehrzahl von Balkenelementen. Im Zwischenraum können nach einem Ausführungsbeispiel ein Schalldämmelement und/oder ein Abscheideelement für Feuchtigkeit vorgesehen sein.

Für den Fachmann ist offensichtlich, dass viele weitere Modifikationen zusätzlich zu den beschriebenen Ausführungsbeispielen des Raumsystems möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Beton-Verbundelement (1) für ein Deckenelement (11), welches ein Betonplattenelement (12), ein erstes Balkenelement (3) und ein zweites Balkenelement (4) umfasst, wobei das Betonplattenelement (12) auf dem ersten Balkenelement (3) und dem zweiten Balkenelement (4) aufliegt, wobei das Betonplattenelement (12), das erste Balkenelement (3) und das zweite Balkenelement (4) einen Zwischenraum (13) begrenzen, **dadurch gekennzeichnet, dass** der Zwischenraum (13) ein Luftumwälzelement (2) enthält, wobei durch das Luftumwälzelement (2) ein Luftstrom (25) erzeugbar ist, welcher auf die dem Zwischenraum (13) zugewendete Oberfläche (16) des Betonplattenelements (12) gerichtet ist.

2. Beton-Verbundelement (1) nach einem der vorhergehenden Ansprüche, wobei das Betonplattenelement (12) vom Luftstrom (25) beheizbar oder kühlbar ist.

3. Beton-Verbundelement (1) nach einem der vorhergehenden Ansprüche, wobei das Betonplattenelement (12) als ein Wärmespeicher oder ein Kältespeicher ausgebildet ist.

4. Beton-Verbundelement (1) nach einem der vorhergehenden Ansprüche, wobei das Betonplattenelement (12) eine Höhe von maximal 15 cm aufweist.

5. Beton-Verbundelement (1) nach einem der vorhergehenden Ansprüche, wobei das Balkenelement (3, 4) eine Oberseite und eine Unterseite aufweist, wobei die Oberseite das Betonplattenelement (12) trägt.

6. Beton-Verbundelement (1) nach einem der vorhergehenden Ansprüche, wobei das Luftumwälzelement (2) einen Strömungskanal (20) enthält, sodass der Luftstrom (25) vom Luftumwälzelement (2) in einen Aufenthaltsraum (30) leitbar ist.

7. Beton-Verbundelement (1) nach einem der vorhergehenden Ansprüche, wobei mittels des Luftumwälzelements (2) ein Luftzug (28) vom Aufenthaltsraum (30) in Richtung des Betonplattenelements (12) leitbar ist.

8. Beton-Verbundelement (1) nach einem der vorhergehenden Ansprüche, wobei das Luftumwälzelement (2) einen Strömungskanal (20) enthält, dessen Querschnitt sich in Strömungsrichtung kontinuierlich verengt und anschliessend kontinuierlich erweitert.

9. Beton-Verbundelement (1) nach einem der vorhergehenden Ansprüche, wobei sich von der Unterseite des ersten Balkenelements (3) zur Unterseite des zweiten Balkenelements (4) ein Abdeckelement (22) erstreckt.

10. Beton-Verbundelement (1) nach Anspruch 9, wobei das Abdeckelement (22) Öffnungen (21, 23) zum Durchtritt von Luft aufweist.

11. Beton-Verbundelement (1) nach Anspruch 10, wobei zumindest ein Teil der Öffnungen (21, 23) Austrittsöffnungen des Strömungskanals (20) ausbilden.

12. Beton-Verbundelement (1) nach einem der Ansprüche 9 oder 10, wobei das Abdeckelement (22) luftdurchlässig ist.

13. Beton-Verbundelement (1) nach einem der vorhergehenden Ansprüche, wobei das Luftumwälzelement (2) mittels eines Halteelements an dem ersten oder zweiten Balkenelement (3, 4) und/oder dem Betonplattenelement (12) gehalten ist.

14. Raumsystem, umfassend ein Beton-Verbundelement (1) nach einem der vorhergehenden Ansprüche.

15. Raumsystem nach Anspruch 14, wobei das Betonplattenelement (12), ein erstes Wandelement und/oder ein zweites Wandelement und das erste und zweite Balkenelement (3, 4) den Zwischenraum (13) begrenzen.

## Claims

1. A concrete composite element (1) for a ceiling element (11) which comprises a concrete slab element (12), a first beam element (3) and a second beam element (4), wherein the concrete slab element (12) rests on the first beam element (3) and the second beam element (4), wherein the concrete slab element (12), the first beam element (3) and the second beam element (4) delimit an intermediate space (13), **characterized in that** the intermediate space (13) contains an air circulation element (2), wherein an air flow (25) can be generated by the air circulation element (2) which is directed onto the surface (16) of the concrete slab element (12) facing the intermediate space (13).

2. The concrete composite element (1) of one of the preceding claims, wherein the concrete slab element (12) can be heated or cooled by the air flow (25).

3. The concrete composite element (1) of one of the preceding claims, wherein the concrete slab element (12) is configured as a heat store or a cold store.

4. The concrete composite element (1) of one of the preceding claims, wherein the concrete slab element (12) has a height of at most 15 cm.

5. The concrete composite element (1) of one of the preceding claims, wherein the beam element (3, 4) has an upper side and a lower side, wherein the upper side carries the concrete slab element (12).

6. The concrete composite element (1) of one of the preceding claims, wherein the air circulation element (2) contains a flow channel (20) so that the air flow (25) from the air circulation element (2) can be guided into a dwelling space (30).

7. The concrete composite element (1) of one of the preceding claims, wherein by means of the air circulation element (2) a draft (28) can be directed from the dwelling space (30) into the direction of the concrete slab element (12).

8. The concrete composite element (1) of one of the preceding claims, wherein the air circulation element (2) contains a flow channel (20) whose cross section narrows continuously in the direction of flow and expands continuously subsequently.

9. The concrete composite element (1) of one of the preceding claims, wherein a cover element (22) extends from the underside of the first beam element (3) to the underside of the second beam element (4).

10. The concrete composite element (1) of claim 9, wherein the cover element (22) has openings (21, 23) for the passage of air.

11. The concrete composite element (1) of claim 10, wherein at least some of the openings (21, 23) are configured as outlet openings of the flow channel (20).

12. The concrete composite element (1) of one of claims 9 or 10, wherein the cover element (22) is air permeable.

13. The concrete composite element (1) of one of the preceding claims, wherein the air circulation element (2) is held by means of a holding element on the first or second beam element (3, 4) and / or the concrete slab element (12).

14. Room system, comprising a concrete composite element (1) of one of the preceding claims.

15. The room system of claim 14, wherein the concrete slab element (12), a first wall element and / or a second wall element and the first and second beam elements (3, 4) delimit the intermediate space (13).

## Revendications

1. Élément composite en béton (1) pour un élément de plafond (11) qui comprend un élément de dalle en béton (12), un premier élément de poutre (3) et un deuxième élément de poutre (4), en ce que l'élément de dalle en béton (12) repose sur le premier élément de poutre (3) et sur le deuxième élément de poutre (4), l'élément de dalle en béton (12), le premier élément de poutre (3) et le deuxième élément de poutre (4) délimitant un espace intermédiaire (13), **caractérisé en ce que** l'espace intermédiaire (13) contient un élément de circulation d'air (2), **en ce qu'**un flux d'air (25) peut être généré par l'élément de circulation d'air (2), lequel flux d'air est dirigé sur la surface (16) de l'élément de dalle de béton (12) faisant face à l'espace intermédiaire (13).

2. L'élément composite en béton (1) selon l'une quelconque des revendications précédentes, dans lequel l'élément de dalle en béton (12) peut être chauffé ou refroidi par le flux d'air (25).

3. L'élément composite en béton (1) selon l'une quelconque des revendications précédentes, dans lequel l'élément de dalle en béton (12) est conçu comme un accumulateur de chaleur ou un entrepôt frigorifique.

4. L'élément composite en béton (1) selon l'une quelconque des revendications précédentes, dans lequel l'élément de dalle en béton (12) a une hauteur maximale de 15 cm.

5. L'élément composite en béton (1) selon l'une quelconque des revendications précédentes, dans lequel l'élément de poutre (3, 4) a une face supérieure et une face inférieure, dans lequel la face supérieure porte l'élément de dalle en béton (12).

6. L'élément composite en béton (1) selon l'une quelconque des revendications précédentes, dans lequel l'élément de circulation d'air (2) contient un canal d'écoulement (20) de sorte que le flux d'air (25) de l'élément de circulation d'air (2) peut être guidé dans un espace de séjour (30).

7. L'élément composite en béton (1) selon l'une quelconque des revendications précédentes, dans lequel un tirant d'air (28) peut être guidé de l'espace de séjour (30) en direction de l'élément de dalle en béton (12) par l'élément de circulation d'air (2).

8. L'élément composite en béton (1) selon l'une quelconque des revendications précédentes, dans lequel l'élément de circulation d'air (2) contient un canal d'écoulement (20) dont la section transversale se rétrécit continuellement dans le sens de l'écoulement et ensuite se dilate continuellement.

9. L'élément composite en béton (1) selon l'une quelconque des revendications précédentes, dans lequel un élément de couverture (22) s'étend de la face inférieure du premier élément de poutre (3) à la face inférieure du deuxième élément de poutre (4).

10. L'élément composite en béton (1) selon la revendication 9, dans lequel l'élément de couverture (22) contient des ouvertures (21, 23) pour le passage de l'air.

11. L'élément composite en béton (1) selon la revendication 10, dans lequel au moins une partie des ouvertures (21, 23) forment des ouvertures de sortie du canal d'écoulement (20).

12. L'élément composite en béton (1) selon l'une des revendications 9 ou 10, dans lequel l'élément de couverture (22) est perméable à l'air.

13. L'élément composite en béton (1) selon l'une quelconque des revendications précédentes, dans lequel l'élément de circulation d'air (2) est maintenu au moyen d'un élément de maintien sur le premier ou deuxième élément de poutre (3, 4) et / ou l'élément de dalle en béton (12).

14. Système d'espace, comprenant un élément composite en béton (1) selon l'une des revendications précédentes.

15. Système d'espace selon la revendication 14, dans lequel l'élément de dalle de béton (12), un premier élément de mur et / ou un deuxième élément de mur et les premiers et deuxièmes éléments de poutre (3, 4) délimitent l'espace (13).
